# EUROPÄISCHE PATENTSCHRIFT

(11) **EP 3 250 088 B1**
(45) Veröffentlichungstag und Bekanntmachung des Hinweises auf die Patenterteilung: **12.12.2018**
(21) Anmeldenummer: 16704550.9
(22) Anmeldetag: 29.01.2016
(51) Int. Cl.: A47J 27/00, G01F 23/296

(54) **KÜCHENGERÄT**
KITCHEN APPLIANCE
APPAREIL DE CUISINE

(30) Priorität: 29.01.2015 DE 102015101299
(43) Veröffentlichungstag der Anmeldung: 06.12.2017
(60) Teilanmeldung: 17204879.5
(73) Patentinhaber: Vorwerk & Co. Interholding GmbH, 42275 Wuppertal (DE)
(72) Erfinder: CORNELISSEN, Markus, 53332 Bornheim (DE); LANG, Torsten, 42657 Solingen (DE)
(74) Vertreter: Müller, Enno
(86) Internationale Anmeldenummer: PCT/EP2016/051976
(87) Internationale Veröffentlichungsnummer: WO 2016/120469

(56) Entgegenhaltungen:
- EP-A1- 2 452 599
- WO-A2-2009/060192
- FR-A1- 2 617 965
- JP-A- H11 113 738
- US-A1- 2004 112 225

## Beschreibung

Die Erfindung betrifft ein mit einer Elektroversorgung ausgebildetes Küchengerät, das einen Topf zur Aufnahme von mit dem Küchengerät zu verarbeitendem, eine Nahrungsmittel-Füllfläche ausbildenden Nahrungsmittel aufweist, wobei zur Bestimmung des Füllstandes des Nahrungsmittels in dem Topf ein Ultraschallsender und ein Ultraschallempfänger vorgesehen sind, und der Topf eine Topfwand mit einer Wanddicke und einer zylindrischen oder sich konisch öffnenden Innenfläche aufweist.

Küchengeräte, die einen Topf zur Aufnahme von mit dem elektrischen Küchengerät zu verarbeitenden Nahrungsmitteln, sowie häufig auch einen Deckel zum Verschließen des Topfes aufweisen, sind aus der Praxis gut bekannt. Exemplarisch sei auf Dampfkochtöpfe sowie auf multifunktionale Küchenmaschinen verwiesen. Letztere sind in der Regel mit einem derartigen Topf versehen, der die Aufnahme von Nahrungsmitteln ermöglicht, damit diese darin auf verschiedene Weisen verarbeitet werden können. Eine derartige Verarbeitung der Nahrungsmittel kann z.B. in einem Zerkleinern, Verrühren oder Verkneten bestehen. Darüber hinaus sind derartige Töpfe von Küchenmaschinen bekannt, die zusätzliche Funktionen bereitstellen, wie ein Wiegen der darin enthaltenen Nahrungsmittel und/oder ein Erhitzen.

Beim Einfüllen des Nahrungsmittels in einen derartigen Topf ist es häufig von hoher Wichtigkeit, ein Überbefüllen des Topfes zu vermeiden. Ist der Topf nämlich mit einem Nahrungsmittel, wie einer Flüssigkeit, über ein vorbestimmtes Maß hinaus befüllt, so kann die Gefahr bestehen, dass bei der Verarbeitung des Nahrungsmittels, z.B. während eines Mixvorgangs, Nahrungsmittel aus dem Topf austritt. Dem kann vorgebeugt werden, indem das elektrische Küchengerät mit einer Füllstandsbestimmungseinrichtung zur Bestimmung des Füllstands des Nahrungsmittels in dem Topf versehen wird. Dabei muss die Füllstandsbestimmungseinrichtung regelmäßig keine quantitative Messung des Füllstands des Nahrungsmittels im Topf ermöglichen. Vielmehr ist es im Allgemeinen ausreichend, wenn die Füllstandsbestimmungseinrichtung erfasst, ob die Füllhöhe des Nahrungsmittels im Topf tatsächlich unterhalb einer maximal zulässigen höchsten Füllstandshöhe liegt.

Aus der EP 2 633 790 B1 ist bereits ein elektrisches Küchengerät mit einer Füllstandsbestimmungseinrichtung bekannt. Dort ist beschrieben, dass ein Sender und ein Empfänger zum Aussenden bzw. zum Empfangen von Strahlung derart am Deckel angebracht sind, dass der Füllstand in dem Topf auch bei geöffnetem Deckel erfassbar ist.

Aus der US 2010/0058856 A1 ist eine becherförmige Messeinrichtung bekannt, bei welcher die Messeinrichtung einen Ultraschallsensor aufweist, der am oberen Becherrand vorragend in das Innere des Bechers angeordnet ist. Aus der GB 2 076 536 A ist eine Vorrichtung zur Erfassung eines Flüssigkeitsstandes bekannt, bei welcher rückwärtig zu einer Gefäßwandung Ultraschallsender und -empfänger angeordnet sind, wobei die Schallausbreitung innerhalb der Wandung des Gefäßes für die Bestimmung des Flüssigkeitsspiegels wesentlich ist. Die US 2010/0000315 A1 zeigt eine in einem Deckel integrierte elektrooptische Einrichtung zur Erfassung eines Flüssigkeitsspiegels in einem Behältnis. Die JP 11113738 A beschreibt zur Erfassung eines Wasserspiegels beim Reiskochen eine in eine Handhabe eines Gefäßes integrierte Messeinrichtung auf Basis eines Ultraschallsensors. Die FR 2 617 965 A1 beschreibt zur Erfassung einer Flüssigkeit in einem Gefäß einen durch eine Öffnung in der Wandung des Gefäßes hindurchragenden Sensor zur Anregung und Erfassung elastischer Wellen. Ausgehend von dem dargelegten Stand der Technik beschäftigt sich die Erfindung mit der Aufgabe, eine Füllstandsbestimmung in einem Topf eines mit einer Elektroversorgung versehenen Küchengerätes einfach und verlässlich vorzusehen.

Diese Aufgabe ist durch den Gegenstand des Anspruches 1 gelöst, wobei darauf abgestellt ist, dass der Ultraschallsender und/oder der Ultraschallempfänger zur Aussendung oder zum Empfang von Ultraschall im Bereich der zylindrischen oder der sich konisch öffnenden Innenfläche angeordnet ist, unter Bildung eines Teils der zylindrischen oder sich konisch öffnenden Innenfläche durch den Ultraschallsender und/oder den Ultraschallempfänger, oder eine Anordnung des Ultraschallsenders und/oder des Ultraschallempfängers innerhalb der Wanddicke der die zylindrische oder sich konisch öffnende Innenfläche aufweisenden Topfwand, zum Auftreffen von Ultraschall von oben auf die Nahrungsmittel-Füllfläche und zum Empfang von nach oben bezüglich der Nahrungsmittel-Füllfläche reflektiertem Ultraschall.

Der Ultraschallsender und der Ultraschallempfänger sind am Topf angebracht und somit nicht etwa an einem für den Topf vorgesehenen Deckel. Insbesondere wenn ein von dem Topf abnehmbarer Deckel vorgesehen ist, hat dies den Vorteil, dass die Füllstandsbestimmung des Füllstandes des Nahrungsmittels in dem Topf unabhängig von der Stellung des Deckels erfolgen kann und insbesondere auch unabhängig davon, ob der Deckel überhaupt am elektrischen Küchengerät angebracht ist. Das Vorsehen des Ultraschallsenders und des Ultraschallempfängers am oberen Rand des Topfes hat darüber hinaus den Vorteil, dass damit immer ein Ultraschallsignal von oben nach unten auf die Oberfläche des Nahrungsmittels aussendbar ist, und zwar bis hin zu sehr hohen Füllständen des Nahrungsmittels im Topf.

Grundsätzlich können der Ultraschallsender und der Ultraschallempfänger auf die Wand des Topfes aufgesetzt sein, in Fortführung der Wandung, z.B. auch lösbar aufgesetzt. Gemäß einer bevorzugten Weiterbildung der Erfindung ist jedoch vorgesehen, dass der Ultraschallsender und der Ultraschallempfänger in die Wand des Topfes integriert sind. Dies macht den Ultraschallsender und den Ultraschallempfänger zu unverlierbaren Bestandteilen des Topfes und hat darüber hinaus auch hygienische Vorteile, da bei einer Integration von Ultraschallsender und Ultraschallempfänger in die Wand des Topfes diese glatt hergestellt werden kann, was sie leichter reinigbar macht.

Weiterhin ist es grundsätzlich ausreichend, wenn ein Ultraschallsender und ein Ultraschallempfänger vorgesehen sind Gemäß einer bevorzugten Weiterbildung der Erfindung sind der Ultraschallsender und der Ultraschallempfänger jedoch Teil eines am oberen Rand des Topfes ausgebildeten Sensorrings, der eine Mehrzahl von Sensoren und somit wenigstens einen weiteren Sensor aufweist. Der weitere Sensor kann grundsätzlich auch ein Ultraschallsensor sein. Vorzugsweise ist jedoch vorgesehen, dass der weitere Sensor ein von einem Ultraschallsensor verschiedener Sensor ist, z.B. ein Temperatursensor oder eine "künstliche Nase". Unter einer "künstlichen Nase" versteht man eine "elektronische Nase", mit welcher im engeren Sinne chemosensorische Messsysteme gemeint sind, die dem biologischen Geruchssinn nachgebildet sind. Hiermit können zwar nicht primär Geruchseigenschaften ermittelt werden, sondern Zusammensetzungen von Gasmischungen analysiert werden und dann in Gerüche umgedeutet werden. In weiterer Einzelheit wird hierzu etwa auf den Aufsatz "Chemosensorik und Geruchsmessung", Peter Boeker, Institut für Landtechnik, Universität Bonn, in Agrartechnische Forschung 7 (2001) Heft 4, Seiten 77-81, verwiesen.

Mit dem Ultraschallsender und dem Ultraschallempfänger ist durch ein auf die Oberfläche des Nahrungsmittels ausgesandtes und von der Oberfläche des Nahrungsmittels reflektiertes Ultraschallsignal der Füllstand des Nahrungsmittels in dem Topf bestimmbar. Gemäß einer bevorzugten Weiterbildung der Erfindung kommt dem Ultraschallsender jedoch eine zusätzliche Funktion zu. Gemäß dieser bevorzugten Weiterbildung der Erfindung ist nämlich eine Ultraschallsteuerung vorgesehen, mit der der Ultraschallsender derart ansteuerbar ist, dass gleichzeitig zur Füllstandsbestimmung eine Reinigung des Topfes erfolgt. Dies bedeutet, dass die Ultraschallsteuerung den Ultraschallsender zur Topfreinigung mit einem derartigen Ultraschallsignal ansteuert, dass die Wand des Topfes, zumindest bereichsweise, zu derartigen Schwingungen anregt, die ein Lösen von dort potentiell sitzenden Verschmutzungen ermöglicht. Ganz besonders vorteilhaft ist diese bevorzugte Ausgestaltung der Erfindung deswegen, weil die Reinigung mittels des Ultraschallsignals keine zusätzliche Zeit in Anspruch nehmen muss, sondern zeitgleich zur Füllstandsbestimmung mittels des auf die Oberfläche des in dem Topf befindlichen Nahrungsmittels ausgesandten Ultraschallsignals erfolgen kann. Im Hinblick auf unterschiedliche Schallintensitäten, die ggf. zur Füllstandsbestimmung einerseits und zur Reinigung andererseits genutzt werden sollen, kann auch ein diesbezüglich intermittierender Betrieb des Ultraschallsenders vorgesehen sein. Es kann auch vorgesehen sein, dass der Ultraschallsensor und der Ultraschallempfänger einerseits in einer Betriebsweise Erfassung des Füllstandes arbeiten und andererseits, insbesondere wenn hiermit eine andere Schallintensität verbunden ist, in der Betriebsweise Reinigung. Diese Betriebsweisen können dann auch durch einen Benutzer bspw. frei wählbar sein oder durch ein Steuerprogramm der Küchenmaschine vorgebbar sein.

Der Ultraschallsender und der Ultraschallempfänger können getrennt voneinander als voneinander verschiedene Einrichtungen am oberen Rand des Topfes angebracht sein. Gemäß einer bevorzugten Weiterbildung der Erfindung sind der Ultraschallsender und der Ultraschallempfänger jedoch gemeinsam als ein Transducer ausgebildet. Dies vereinfacht die Ausgestaltung des elektrischen Küchengeräts und reduziert die Kosten, da nur eine einzige Ultraschalleinrichtung für die Füllstandsmessung erforderlich ist.

Nachfolgend werden zur Erläuterung der Erfindung unter Bezugnahme auf die Zeichnung verschiedene Ausführungsbeispiele näher beschrieben. In der Zeichnung zeigt
- Fig.1: schematisch ein elektrisches Küchengerät gemäß einem ersten bevorzugten Ausführungsbeispiel der Erfindung mit einem Ultraschallsender und einem Ultraschallempfänger zur Füllstandsbestimmung und
- Fig. 2: schematisch ein elektrisches Küchengerät gemäß einem zweiten Ausführungsbeispiel mit einem streifenförmigen Heizelement zur Füllstandsbestimmung, das kein Ausführungsbeispiel gemäß der Erfindung ist.

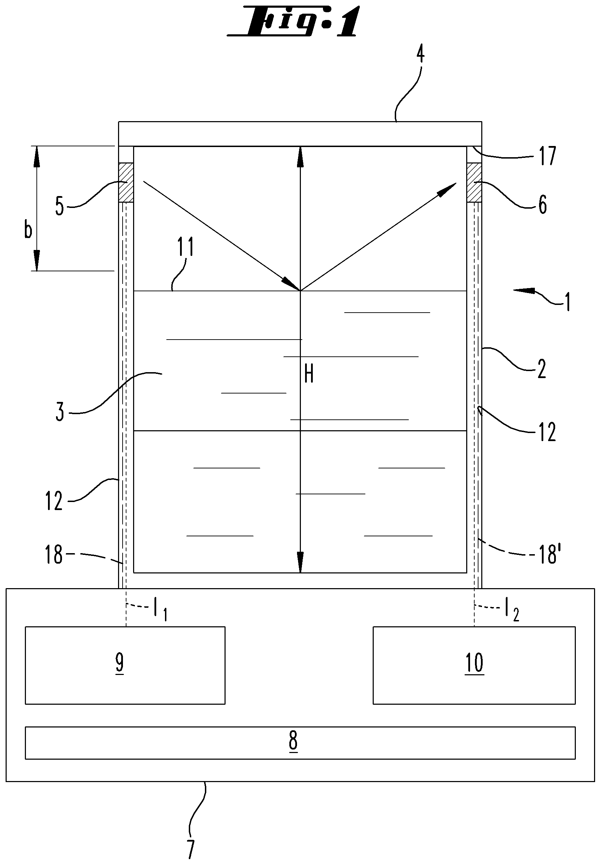

Aus Figur 1 ist schematisch ein elektrisches Küchengerät 1 mit einem Topf 2 zur Aufnahme eines mit dem elektrischen Küchengerät 1 zu verarbeitenden Nahrungsmittels 3 ersichtlich. Zum Verschließen des Topfes 2 dient ein Deckel 4. Zur Bestimmung des Füllstands des in dem Topf 2 befindlichen Nahrungsmittels 3, vorliegend einer Flüssigkeit, sind ein Ultraschallsender 5 sowie ein Ultraschallempfänger 6 vorgesehen. Der Ultraschallsender 5 und der Ultraschallempfänger 6 sind dazu am oberen Rand des Topfes 2 angebracht, und zwar dort in die Wand 12 des Topfes 2 integriert. Auf diese Weise wird auch im Inneren des Topfes 2 eine glatte Fläche bereitgestellt, was aus hygienischen Gründen vorteilhaft ist und insbesondere eine einfache Reinigung des Topfes 2 erlaubt.

Der Topf kann ein Metalltopf sein. Der Topf kann aus einem Stahlwerkstoff bestehen. Er kann beispielsweise im Tiefziehverfahren hergestellt sein. Der Topf kann auch aus mehreren Materialien bestehen, insbesondere einen metallischen Teil und einen Kunststoffteil aufweisen. Das Kunststoffteil kann außenseitig zu dem Metallteil angebracht sein. Das Kunststoffteil kann über einen Teil des

Umfangs des Topfes oder auch vollständig umfassend zu dem Topf vorgesehen sein. In letzterem Fall kann allerdings über die Höhe des Topfes nur über einen Teil der Höhe die Umfassung ausgebildet sein. Auch beispielsweise über einen Zwischenbereich der Höhe, so dass der Fußbereich des Topfes und der Randbereich keine umfassende (in Umfangsrichtung) Kunststoffumfassung aufweisen. Das Kunststoff teil kann beispielsweise auch einen Topfgriff ausbilden. Die Anordnung des Ultraschall-Sender 5 und/oder des Ultraschall-Empfängers 6 innerhalb der Topfwandung kann auch bedeuten, dass diese Teile zumindest teilweise, gegebenenfalls aber auch vollständig, in einem Kunststoffteil des Topfes aufgenommen sind.

Am oberen Rand des Topfes 2 bedeutet bevorzugt, dass sie bezüglich einer freien Innenhöhe H des Topfes in einem Bereich b ausgehend von einem Topfrand 17 angeordnet sind, der ein Drittel oder weniger, bspw. bis hin zu 1/100, der freien Innenhöhe H beträgt. Hiermit sind auch alle Zwischenwerte, insbesondere in 1/100-Schritten, also in einem Bereich b, der 0,32 bis zu dem Topfrand selbst oder 1/100 oder mehr entfernt von dem Topfrand, entspricht. Auch diese Bereichsgrenze - ausgehend von dem Topfrand in Richtung zum Boden des Topfes - kann in 1/100-Schritten variiert sein. Insbesondere ist auch ein Bereich abgedeckt, der einem Viertel der Innenhöhe H, einem Achtel oder einem Sechzehntel der Innenhöhe H, als Bereich b, entspricht.

Der Topf 2 des elektrischen Küchengeräts 1 ist gemäß dem aus Figur 1 ersichtlichen bevorzugten Ausführungsbeispiel der Erfindung auf einer Basis 7 des Küchengeräts angebracht. In dieser Basis 7 sind neben einer zentralen Steuereinrichtung 8 zur allgemeinen Steuerung des elektrischen Küchengeräts 1 eine Ultraschallsteuerung 9 sowie eine Ultraschallauswerteeinrichtung 10 vorgesehen. Wie mit gestrichelten Linien l1, l2 angedeutet, ist die Ultraschallsteuerung 9 mit dem Ultraschallsender 5 verbunden, und die Ultraschallauswerteeinrichtung 10 ist mit dem Ultraschallempfänger 6 verbunden. Die Linien l1 und l2 können lediglich Signalleitungen bedeuten. Es kann darüber hinaus auch noch eine Leitung 18, 18' zur Energieversorgung des Ultraschallsensors und/oder des Ultraschallempfängers vorgesehen sein.

Die Funktionsweise des elektrischen Küchengeräts 1 gemäß dem vorliegend beschriebenen bevorzugten Ausführungsbeispiel der Erfindung ist nun wie folgt:
Mit der Ultraschallsteuerung 9 wird der Ultraschallsender 5 derart angesteuert, dass dieser, wie mit einem schräg nach unten weisenden Pfeil angedeutet, ein Ultraschallsignal nach unten hin zur Oberfläche 11 des Nahrungsmittels 3 im Topf 2 aussendet. Dort erfolgt eine teilweise Reflexion des Ultraschallsignals, so dass ein reflektierter Anteil des Ultraschallsignals wieder schräg nach oben läuft und dort auf den Ultraschallempfänger 6 trifft. Das von dem Ultraschallempfänger 6 empfangene Signal wird dann an die Ultraschallauswerteeinrichtung 10 übermittelt, die ihrerseits aus der Laufzeit des Ultraschallsignals vom Ultraschallsender 5 zum Ultraschallempfänger 6 den Füllstand des Nahrungsmittels 3 im Topf 2 bestimmen kann. Nur wenn der dadurch bestimmte Füllstand unterhalb eines vorbestimmten maximalen Füllstands liegt, und damit keine Überbefüllung des Topfes 2 vorliegt, lässt sich das elektrische Küchengerät 1 anschalten. Die entsprechende Funktionalität ist in der zentralen Steuereinheit 8 verwirklicht.

Aufgrund der Anordnung von Ultraschallsender 5 und Ultraschallempfänger 6 am oberen Rand des Topfes 2 ist es unerheblich, ob der Deckel 4 am elektrischen Küchengerät 1 angebracht ist bzw. wie der Deckel 4 auf dem Topf 2 aufgesetzt ist. Da der Topf 2 gemäß dem vorliegend beschriebenen bevorzugten Ausführungsbeispiel der Erfindung von dem Topf 2 vollständig abnehmbar ist, ist dies von großem Vorteil, da die Füllstandsbestimmung des Nahrungsmittels 3 in dem Topf 2 völlig unabhängig von dem Deckel 4 ist und damit auch dann funktioniert, wenn der Deckel 4 gar nicht am Topf 2 angebracht ist.

Neben der Funktionalität des Ultraschallsenders 5 zum Aussenden eines Ultraschallsignals auf die Oberfläche 11 des Nahrungsmittels 3 im Topf 2 ist mittels der Ultraschallsteuerung 9 auch eine derartige Ansteuerung des Ultraschallsenders 5 möglich, dass gleichzeitig zur Füllstandsbestimmung eine Reinigung des Topfes 2 erfolgt. Dazu ist eine Ansteuerung des Ultraschallsenders 5 mit einer passenden Frequenz und einer hinreichend großen Amplitude erforderlich, um die Wand 12 des Topfes 2 zu derartigen Schwingungen anzuregen, die ein Ablösen von dort festsitzenden Verschmutzungen ermöglicht. Ein derartiger Reinigungsvorgang nimmt damit keine zusätzliche Zeit in Anspruch, da er gleichzeitig zur Erfassung des Füllstands des Nahrungsmittels 3 im Topf 2 erfolgen kann.

Üblicherweise werden insbesondere zur Ultraschall-Reinigung Frequenzen von 20 bis 400 kHz eingesetzt. Bevorzugt sind Frequenzen im Bereich von 20 bis 50 kHz. Auch höhere Frequenzen sind aber für eine Reinigung, insbesondere in Bezug auf vergleichsweise kleine Partikel, günstig. So werden etwa Frequenzen im Bereich von 200 kHz, also etwa 180 bis 220 kHz, für eine Reinigung im Hinblick im Hinblick auf Partikel mit einem Durchmesser größer 1 µm eingesetzt. Zur Ablösung von Partikeln noch kleineren Durchmessers kann die oben angegebene Bandbreite auch noch weiter nach oben bis hin zu 2 MHz erweitert sein.

Hinsichtlich der Schallleistung ist 50 Watt oder mehr, bis hin zu beispielsweise 2.400 Watt bevorzugt. Jedenfalls dann, wenn es sich um eine Reinigungsanwendung handelt.

Bei einer Füllstandsmessung kann auch mit geringeren, auch wesentlich geringeren Leistungen, gearbeitet werden. Etwa im Bereich von 0,5 - 5 Watt. Allerdings ist bei einer Füllstandsmessung bevorzugt eine höhere Frequenz genutzt. Beispielsweise im Bereich von 350 - 450 kHz, bevorzugt bei 370 - 390 kHz und weiter bevorzugt bei 380 kHz.

Es ist aber auch eine Füllstandserkennung möglich bei einer Reinigungsanwendung, und mit den insofern beschriebenen Frequenzen und Leistungen, wozu hierdurch erzeugte Schwingungen des Topfes im Hinblick auf ein Ausschwingverhalten, also beispielsweise wie schnell nach Beendigung der Beaufschlagung durch Ultraschall eine bestimmte vorgegebene Schwingung des Topfes, die zuvor durch die Beaufschlagung mit Ultraschall angeregt war, unterschritten wird, als Rückschluss auf die Masse, die sich im Topf befindet, gewertet wird.
Im Hinblick auf das Reinigungsverhalten und auch beispielsweise die zuletzt beschriebene Möglichkeit der Füllstandsmessung, reicht es auch aus, wenn ein Ultraschallsender und ein Ultraschallempfänger lediglich an dem metallischen Teil eines Topfes angekoppelt sind. Sie brauchen sich nicht im Inneren der Wandung zu befinden. Sie können also im Topfäußeren insoweit angeordnet sein. Gegebenenfalls aber auch eingebettet und umgeben von einem Kunststoffteil oder einem sonstigen Schutzteil.

Im Hinblick auf eine Füllstandsmessung mit in das Topfinnere abstrahlendem Ultraschallsender ist bevorzugt, dass die Strahlrichtung des Ultraschalls bezogen auf eine Horizontale bei üblicher Nutzung des Topfes in einem nach unten gerichteten Winkel mit der Horizontalen einen solchen Winkel von etwa 30 - 70 Grad, bevorzugt 40 - 60 Grad und weiter bevorzugt etwa 50 Grad einschließt.

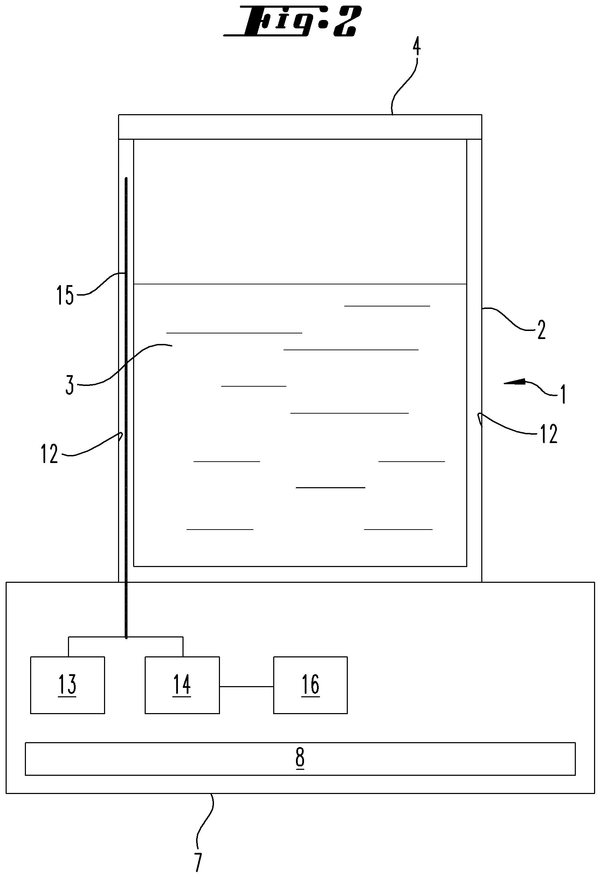

Aus Figur 2 ist ein elektrisches Küchengerät 1 gemäß einem nicht erfindungsgemässen Ausführungsbeispiel ersichtlich. Anstatt mittels eines Ultraschallsignals erfolgt hier eine Füllstandsbestimmung des Nahrungsmittels 3 im Topf 2 mittels eines streifenförmigen Heizelementes 15, das bevorzugt in die Wand 12 des Topfes 2 integriert ist. Dieses Heizelement 15 wird angesteuert und damit beheizt von einer Heizungssteuerung 13, die in der Basis 7 des elektrischen Küchengeräts 1 vorgesehen ist. Das Heizelement 15 ist darüber hinaus mit einer Heizüberwachungseinrichtung 14 verbunden, mit der das Heizverhalten des Heizelements 15 erfassbar ist. Ein vom Heizverhalten des Heizelements 15 abhängiges Heizsignal wird dann von der Heizüberwachungseinrichtung 14 an eine Füllstandsprüfeinrichtung 16 ausgegeben, mit der der Füllstand des Nahrungsmittels 3 im Topf 2 prüfbar ist.

Das Prinzip der Füllstandsmessung besteht darin, dass bei konstanter Ansteuerung zur Heizung des Heizelementes 15 dessen Erwärmung davon abhängt, wieviel Wärme an das Nahrungsmittel 3 in dem Topf 2 abgegeben werden kann. Je höher der Füllstand des Nahrungsmittels 3 im Topf 2 ist, umso größer ist also das Volumen des Nahrungsmittels 3 und damit auch die Wärmekapazität des Nahrungsmittels 3, so dass entsprechend mehr Wärme an das Nahrungsmittel 3 abgegeben werden kann. Damit kommt es zu einer entsprechend geringeren Erwärmung des Heizelementes 15.

Dieses Heizverhalten, also das Maß des Erwärmens des Heizelementes 15, wird von der Heizüberwachungseinrichtung 14 ermittelt, wobei diese ein entsprechendes Heizsignal an die Füllstandsprüfeinrichtung 16 abgibt, die abhängig von diesem Heizsignal prüft, ob der Füllstand des Nahrungsmittels 3 in dem Topf 2 oberhalb oder unterhalb einer maximal zulässigen Füllhöhe liegt, die einen regulären und sicheren Betrieb des elektrischen Küchengeräts 1 ermöglicht.

Als Heizüberwachungseinrichtung 14 ist vorliegend ein elektrischer Widerstandsmesser vorgesehen. Mit diesem elektrischen Widerstandsmesser wird die Temperatur des Heizelementes 15 über das Prinzip erfasst, dass der elektrische Widerstand des Heizelementes 15 mit steigender Temperatur des Heizelementes 15 steigt. Nach einer entsprechenden Eichung wird also mit dem elektrischen Widerstandsmesser die Temperatur des Heizelementes 15 erfasst, so dass basierend darauf mittels der Füllstandsprüfeinrichtung 16 eine zulässige bzw. eine zu hohe Befüllung des Topfes 2 mit dem Nahrungsmittel 3 erfasst werden kann.

### Bezugszeichenliste:

| | | | |
|---|---|---|---|
| 1 | Elektrisches Küchengerät | | |
| 2 | Topf | b | Bereich |
| 3 | Nahrungsmittel | l1 | Linie |
| 4 | Deckel | l2 | Linie |
| 5 | Ultraschallsender | | |
| 6 | Ultraschallempfänger | H | Innenhöhe |
| 7 | Basis | | |
| 8 | Zentrale Steuereinheit | | |
| 9 | Ultraschallsteuerung | | |
| 10 | Ultraschallauswerteeinrichtung | | |
| 11 | Oberfläche | | |
| 12 | Wand des Topfes | | |
| 13 | Heizungssteuerung | | |
| 14 | Heizüberwachungseinrichtung | | |
| 15 | Heizelement | | |
| 16 | Füllstandsprüfeinrichtung | | |
| 17 | Topfrand | | |
| 18 | Leitung | | |
| 18' | Leitung | | |

## Patentansprüche

1. Mit einer Elektroversorgung ausgebildetes Küchengerät (1), das einen Topf (2) zur Aufnahme von mit dem Küchengerät (1) zu verarbeitendem, eine Nahrungsmittel-Füllfläche ausbildenden Nahrungsmittel (3) aufweist, wobei zur Bestimmung des Füllstandes des Nahrungsmittels (3) in dem Topf (2) ein Ultraschallsender (5) und ein Ultraschallempfänger (6) vorgesehen sind, und der Topf (2) eine Topfwand (12) mit einer Wanddicke und einer zylindrischen oder sich konisch öffnenden Innenfläche aufweist, **dadurch gekennzeichnet, dass** der Ultraschallsender (5) und/oder der Ultraschallempfänger (6) zur Aussendung oder zum Empfang von Ultraschall im Bereich der zylindrischen oder der sich konisch öffnenden Innenfläche angeordnet ist, unter Bildung eines Teils der zylindrischen oder sich konisch öffnenden Innenfläche durch den Ultraschallsender (5) und/oder den Ultraschallempfänger (6) oder eine Anordnung des Ultraschallsenders (5) und/oder des Ultraschallempfängers (6) innerhalb der Wanddicke der die zylindrische oder sich konisch öffnende Innenfläche aufweisenden Topfwand (12), zum Auftreffen von Ultraschall von oben auf die Nahrungsmittel-Füllfläche und zum Empfang von nach oben bezüglich der Nahrungsmittel-Füllfläche reflektiertem Ultraschall.

2. Elektrisches Küchengerät nach Anspruch 1, **dadurch gekennzeichnet, dass** der Topf (2) in einer Nutzungsstellung in dem Küchengerät (1) mit einer elektrischen Stromversorgung versehen ist, mit einer sich durch die Topfwandung (12) zwischen dem Ultraschallsender (5) und/oder dem Ultraschallempfänger (6) zu einem Elektroanschluss erstreckenden elektrischen Leitungsverbindung.

3. Elektrisches Küchengerät nach einem der vorhergehenden Ansprüche, **dadurch gekennzeichnet, dass** der Ultraschallsender (5) und der Ultraschallempfänger (6) Teil eines am oberen Rand des Topfes (2) ausgebildeten Sensorrings sind, der wenigstens einen weiteren Sensor aufweist.

4. Elektrisches Küchengerät nach einem der vorhergehenden Ansprüche, **dadurch gekennzeichnet, dass** eine Ultraschallsteuerung (9) vorgesehen ist, mit der der Ultraschallsender (5) derart ansteuerbar ist, dass gleichzeitig zur Füllstandsbestimmung eine Reinigung des Topfes (2) erfolgt.

5. Elektrisches Küchengerät nach einem der vorhergehenden Ansprüche, **dadurch gekennzeichnet, dass** der Ultraschallsender (5) und der Ultraschallempfänger (6) gemeinsam als ein Transducer ausgebildet sind.

## Claims

1. A kitchen appliance (1) designed with an electrical power supply, which has a pot (2) for purposes of accommodating foodstuffs (3) to be processed with the kitchen appliance (1), and forming a foodstuffs fill surface, wherein for purposes of determining the fill level of the foodstuffs (3) in the pot (2) an ultrasound transmitter (5) and an ultrasound receiver (6) are provided, and the pot (2) has a pot wall (12) with a wall thickness and a cylindrical or conically developed internal surface, **characterised in that**,the ultrasound transmitter (5) and/or the ultrasound receiver (6) is arranged in the region of the cylindrical or conically developed internal surface for purposes of transmitting or receiving ultrasound, the ultrasound transmitter (5) and/or the ultrasound receiver (6) forming a part of the cylindrical or conically developed internal surface, or the ultrasound transmitter (5) and/or the ultrasound receiver (6) is arranged within the wall thickness of the pot wall (12) having the cylindrical or conically developed internal surface, for purposes of applying ultrasound from above onto the foodstuffs fill surface, and for purposes of receiving ultrasound reflected upwards from the foodstuffs fill surface.

2. The electrical kitchen appliance in accordance with claim 1, **characterised in that**, when the pot (2) is in a utilisation position in the kitchen appliance (1) it is provided with an electrical power supply, with an electrical cable connection extending through the pot wall (12) between the ultrasound transmitter (5) and/or the ultrasound receiver (6) so as to form an electrical connection.

3. The electrical kitchen appliance in accordance with one of the preceding claims, **characterised in that**, the ultrasound transmitter (5) and the ultrasound receiver (6) are part of a sensor ring formed at the upper edge of the pot (2), which has at least one further sensor.

4. The electrical kitchen appliance in accordance with one of the preceding claims, **characterised in that**, an ultrasound controller (9) is provided, by means of which the ultrasound transmitter (5) can be activated such that the pot (2) is cleaned at the same time as the fill level is determined.

5. The electrical kitchen appliance in accordance with one of the preceding claims, **characterised in that**, the ultrasound transmitter (5) and the ultrasound receiver (6) are collectively designed as one transducer.

## Revendications

1. Appareil de cuisine (1) ayant une alimentation électrique et comprenant un récipient (2) destiné à recevoir un aliment (3) à traiter avec l'appareil de cuisine (1), qui forme une surface de remplissage, dans lequel un émetteur d'ultrasons (5) et un récepteur d'ultrasons (6) sont prévus pour déterminer le niveau de remplissage du récipient (2) par l'aliment (3), et le récipient (2) présente une paroi de récipient (12) avec une épaisseur de paroi et une surface intérieure cylindrique ou à ouverture conique, **caractérisé en ce que** l'émetteur d'ultrasons (5) et/ou le récepteur d'ultrasons (6) sont agencés pour émettre ou recevoir des ultrasons dans la zone de la surface intérieure cylindrique ou à ouverture conique, avec formation d'une partie de la surface intérieure cylindrique ou à ouverture conique par l'émetteur d'ultrasons (5) et/ou le récepteur d'ultrasons (6) ou un agencement de l'émetteur d'ultrasons (5) et/ou du récepteur d'ultrasons (6) dans l'épaisseur de paroi de la paroi de récipient (12) présentant la surface intérieure cylindrique ou à ouverture conique, pour envoyer des ultrasons par le haut sur la surface de remplissage formée par l'aliment et pour recevoir des ultrasons réfléchis vers le haut par rapport à la surface de remplissage formée par l'aliment.

2. Appareil de cuisine électrique selon la revendication 1, **caractérisé en ce que** le récipient (2), en position d'utilisation dans l'appareil de cuisine (1), est pourvu d'une alimentation électrique, avec une liaison par ligne électrique s'étendant à travers la paroi du récipient (12) entre l'émetteur d'ultrasons (5) et/ou le récepteur d'ultrasons (6) jusqu'à un raccordement électrique.

3. Appareil de cuisine électrique selon l'une des revendications précédentes, **caractérisé en ce que** l'émetteur d'ultrasons (5) et le récepteur d'ultrasons (6) font partie d'un anneau de détection formé au niveau du bord supérieur du récipient (2) et qui présente au moins un capteur supplémentaire.

4. Appareil de cuisine électrique selon l'une des revendications précédentes, **caractérisé en ce qu'**est prévue une commande d'ultrasons (9) avec laquelle l'émetteur d'ultrasons (5) peut être commandé de manière qu'un nettoyage du récipient survienne en même temps que la détermination de l'état de remplissage.

5. Appareil de cuisine électrique selon l'une des revendications précédentes, **caractérisé en ce que** l'émetteur d'ultrasons (5) et le récepteur d'ultrasons (6) sont formés ensemble sous la forme d'un transducteur.
